# EUROPEAN PATENT SPECIFICATION

(11) **EP 2 657 048 B1**
(45) Date of publication and mention of the grant of the patent: **15.03.2017**
(21) Application number: 13165076.4
(22) Date of filing: 24.04.2013
(51) Int. Cl.: B60C 11/13, B60C 11/11, B60C 11/12

(54) **Pneumatic tire for running on rough terrain**
Luftreifen zum Fahren in rauem Gelände
Bandage pneumatique pour roulage sur terrain brusque

(30) Priority: 27.04.2012 JP 2012103596
(43) Date of publication of application: 30.10.2013
(73) Proprietor: Sumitomo Rubber Industries, Ltd., Kobe-shi, Hyogo-ken (JP)
(72) Inventor: Ishida, Shingo, Kobe-shi, Hyogo 651-0072 (JP)
(74) Representative: Manitz, Finsterwald & Partner GbR

(56) References cited:
- EP-A1- 0 613 794
- EP-A1- 2 412 546
- EP-A1- 2 412 547
- DE-C1- 19 822 573
- US-A- 4 296 789
- Motorcycle Superstor Inc.: "Dunlop Quadmax-Sport Radial Front Tire", , 29 July 2010 (2010-07-29), XP002703993, Retrieved from the Internet: URL:http://www.motorcycle-superstore.com/4 /30/397/18839/ITEM/Dunlop-Quadmax-Sport-Ra dial-Front-Tire.aspx [retrieved on 2013-07-19]

## Description

### Background of the Invention

The present invention relates to a pneumatic tire for running on rough terrain, more particularly to a block tread pattern capable of improving the stability and controllability without sacrificing ride comfort and ground contact feeling. The features of the preamble of the independent claim are known from EP 2 412 547 A1. Related technologies are known from US 4 296 789 A, EP 2 412 546 A1, DE 198 22 573 C1, EP 0 613 794 A1 and Motorcycle superstore Inc.:"Dunlop Quadmax-Sport Radial Front Tire", 29-July-2010, XP002703993, retrieved from the Internet URL:http://www.motocylce-superstore.com/4/30/397/18839/ITEM/ Dunlop-Quadmax-Sport-Radial-Front-Tire.aspx.

Pneumatic tires for off-road vehicles are provided with block tread patterns whose land ratio is relatively low. In other words, the blocks are arranged sparsely when compared with tires designed for on-road use.

In order to improve stability and controllability of a vehicle when running off the road, there are widely employed a technique to increase the sizes of blocks to increase the edge effect by the increased edge length of the blocks, and a technique to increase the rubber hardness of blocks to improve the grip performance. In these techniques, however, when running on a relatively hard road or on the road, the ride comfort becomes very bad and the ground contact feeling tends to become bad.

U.S. Patent Application Publication No. 2008-245457 discloses a technique to increase the edge effect of a block without increasing the size of the block or without increasing the hardness of the block. According to this technique, a shoulder block is provided with an axially outwardly protruding part to increase the edge length in an axially outside of the shoulder block in order to improve cornering performance. In this technique, however, there is room for improvement of the stability and controllability without sacrificing the ride comfort and ground contact feeling.

### Summary of the Invention

It is therefore, an object of the present invention to provide a pneumatic tire for running on rough terrain, in which the stability and controllability can be improved without deteriorating the ride comfort and ground contact feeling.

The pneumatic tire according to the present invention is defined in the independent claim. A pneumatic tire for running on rough terrain comprises
a tread portion provided with blocks including crown blocks disposed in a tread crown region, shoulder blocks disposed in a pair of tread shoulder regions, and middle blocks disposed in tread middle regions between the tread crown region and the tread shoulder regions,
the crown blocks each having an aspect ratio less than an aspect ratio of each of the middle blocks and less than an aspect ratio of each of the shoulder blocks, wherein the aspect ratio is a ratio of the circumferential distance between the extreme circumferential ends of the block to the axial distance between the extreme axial ends of the block,
the crown blocks including shifted blocks, wherein the shifted block is provided in its central portion in the tire axial direction with a slot extending in the tire circumferential direction to form two subdivided block pieces one on each side of the slot, and the two block pieces are circumferentially shifted from each other, and
the middle blocks and the shoulder blocks including cut blocks, wherein the cut block is provided with a U-shaped cut opened at the top face and a side face of the cut block.

Therefore, in the crown blocks including the shifted blocks, the circumferential component of their edges effective when cornering is increased to increase the frictional force, and thereby the stability and controllability can be improved. Further, in the middle blocks and shoulder blocks including cut blocks, multidirectional components of their edges are increased. Accordingly, the stability and controllability can be increased without increasing the size of the block and the hardness of rubber of the block, therefore, the ride comfort and ground contact feeling can be prevented from being deteriorated. Furthermore, the inside part of the cut block can move relatively to the outside part, therefore, the effective edge length or edge effect is increased to improve the stability and controllability.

Preferably, the crown blocks are arranged in the tread crown region so that the arrangement includes a plurality of groups each consisting of two or more shifted blocks arranged successively in the tire circumferential direction, and
the middle blocks disposed in shifted-block-group regions are positioned axially inside the middle blocks disposed outside the shifted-block-group regions, wherein the shifted-block-group region is defined between two axial lines drawn passing through the circumferential ends of each of the groups of the shifted blocks.

Preferably, the crown blocks including nonshifted blocks, wherein the nonshifted block is provided in its central portion in the tire axial direction with a slot extending in the tire circumferential direction to form two subdivided block pieces one on each side of the slot, and the two block pieces are not shifted from each other in the tire circumferential direction,
the crown blocks are arranged in the tread crown region so that the arrangement includes a plurality of groups each consisting of two or more nonshifted blocks arranged successively in the tire circumferential direction, and
the middle blocks disposed in nonshifted-block-group regions are positioned axially outside the middle blocks disposed outside the nonshifted-block-group regions, wherein the nonshifted-block-group region is defined between two axial lines drawn passing through the circumferential ends of each of the groups of the nonshifted blocks.

Preferably, the nonshifted blocks have an axial width which is smallest in the crown blocks.

Preferably, the shifted blocks have an axial width which is largest in the crown blocks.

Preferably, the tread portion is provided in its bottom with a recess disposed between every two of the circumferentially adjacent crown blocks.

The shifted blocks include a first shifted block and a second shifted block in which the circumferentially shifting direction of its two block pieces is opposite from that in the first shifted block.

Preferably, the middle blocks overlap with the recess in the tire circumferential direction.

Preferably, the cut blocks as the middle blocks are oriented such that the U-shape of the U-shaped cut opens toward the axially outside, and
the cut blocks as the shoulder blocks are oriented such that the U-shape of the U-shaped cut opens toward the axially inside.

Preferably, in the cut blocks as the middle blocks, the depth of the U-shaped cut is more than the depth of the slot, and
in the cut blocks as the shoulder blocks, the depth of the U-shaped cut is more than the depth of the slot and less than the depth of the U-shaped cut in the middle blocks.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia),STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

### Brief Description of the Drawings

Fig. 1 is a cross sectional view of a motorcycle tire for running on rough terrain under the normally inflated unloaded condition, as an embodiment of the present invention, taken along line A-A in Fig. 2A.
Fig. 2A is a developed partial view of the tread portion showing an example of the tread pattern.
Fig. 2B shows a modification of the tread pattern shown in Fig. 2A.
Fig. 3A is a perspective view of a shifted block.
Fig. 3B is a top view thereof.
Fig. 4A is a top view of a nonshifted block.
Fig. 4B is a cross sectional view thereof taken along line B-B in Fig. 4A.
Fig. 5A is a perspective view of a cut block,
Fig. 5B is a cross sectional view thereof taken along line C-C in Fig. 5A.
Fig. 6A is a perspective view of another example of the cut block.
Fig. 6B is a cross sectional view thereof taken along line D-D in Fig. 6A.
Fig. 7 shows another example of the configuration of the cut of the cut block,
Fig. 8A is a plan view of a cut block used as the middle block.
Fig. 8B is a plan view of a cut block used as the shoulder block.
Fig. 9A is a cross sectional view showing a state of the cut block in which the inside part is moved toward the outside of the cut block.
Fig. 9B is a cross sectional view showing a state of the cut block in which the inside part is moved toward the inside of the cut block.

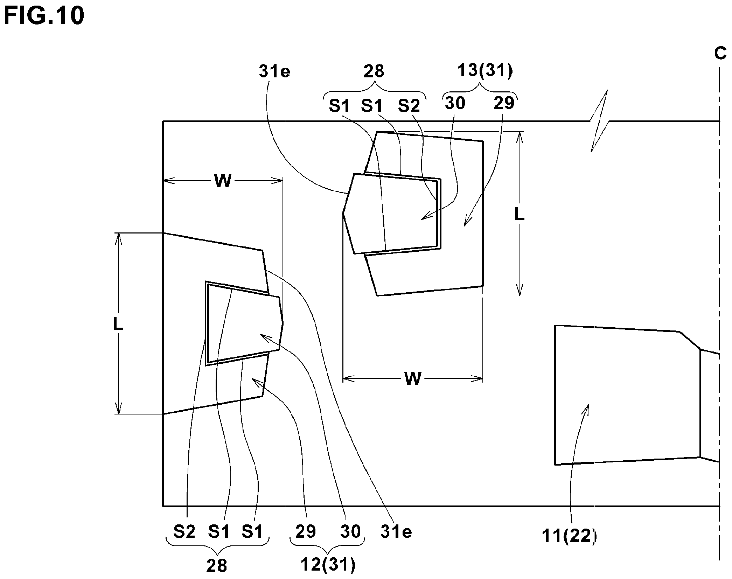

Fig. 10 shows the top views of the middle block and the shoulder block
Fig. 11 is a plan view of the cut blocks as the middle block and shoulder block.
Fig. 12 is a plan view of another arrangement of the cut blocks as the middle block and shoulder block.

### Description of the Preferred Embodiments

Embodiments of the present invention will now be described in detail in conjunction with the accompanying drawings.

According to the present invention, pneumatic tire 1 comprises a tread portion 2, a pair of bead portions 4 each with a bead core 5 therein, a pair of sidewall portions 3 extending from the tread edges to the bead portions 4, a carcass 6 extending between the bead portions 4 through the tread portion 2 and sidewall portions 3, and a tread reinforcing layer 7 disposed radially outside the carcass 6 in the tread portion 2.

In the drawings, the pneumatic tire 1 as an embodiment of the present invention is designed for a off-road motorcycle.

As a characteristic of a motorcycle tire, the tread portion 2 is convexly curved so that the tread face between the tread edges 2t is curved like an arc swelling radially outwardly, and the maximum cross sectional width of the tire 1 occurs between the tread edges 2t, namely, equals to the axial tread width TW.

In this embodiment, the tire 1 is designed to exert its excellent performance when running on soft grounds such as sand and mud and thus it is suitable for used in a motocross race.

The carcass 6 is composed of at least one ply, in this embodiment only one ply, of carcass cords extending between the bead portions 4 through the tread portion 2 and sidewall portions 3, and turned up around the bead core 5 in each of the bead portions 4 from the inside to the outside of the tire so as to form a pair of turned up portions 6b and one main portion 6a therebetween.

The bead portions 4 are each provided between the main portion 6a and turned up portion 6b of the carcass ply 6A with a bead apex 8 made of hard rubber extending radially outwardly from the bead core 5.

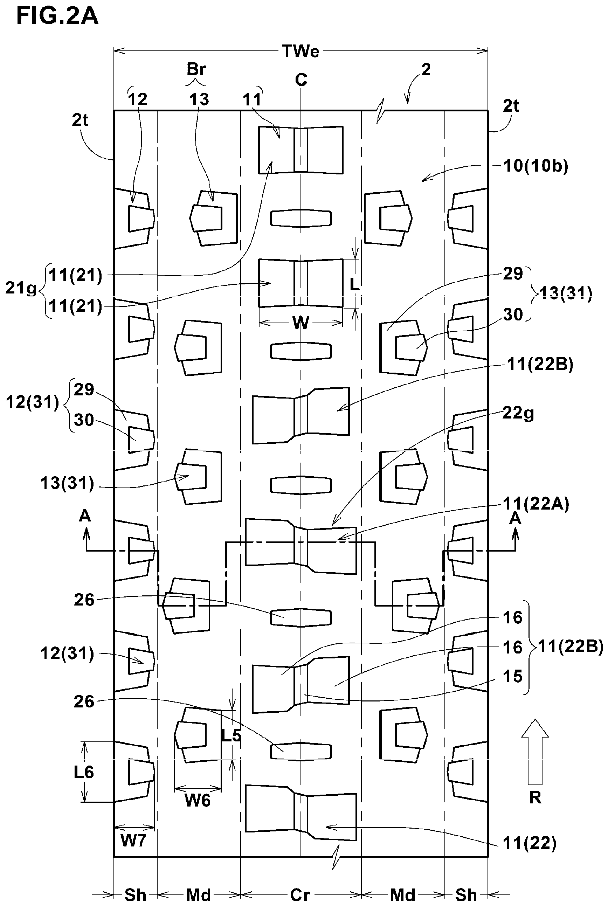

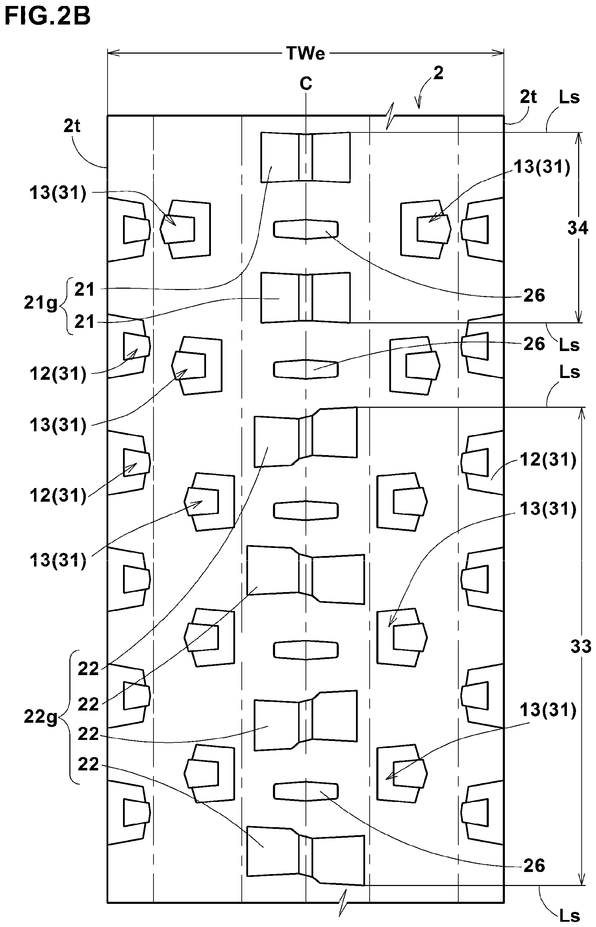

The tread portion 2 is provided with a plurality of blocks Br arranged sparsely as shown in Fig. 2A and Fig. 2B, and in this embodiment, the land ratio (Sb/S) is set in a range of not more than 0.30 but not less than 0.06 in order to increase the digging of the blocks into the soft ground and thereby to produce a large drive power, but not to trap the mud and the like between the blocks.
Incidentally, the land ratio (Sb/S) is as well known in the art, a ratio of the ground contacting area Sb (or the total area of the ground contacting top faces of all the blocks Br) to the gross area S of the tread portion 2.

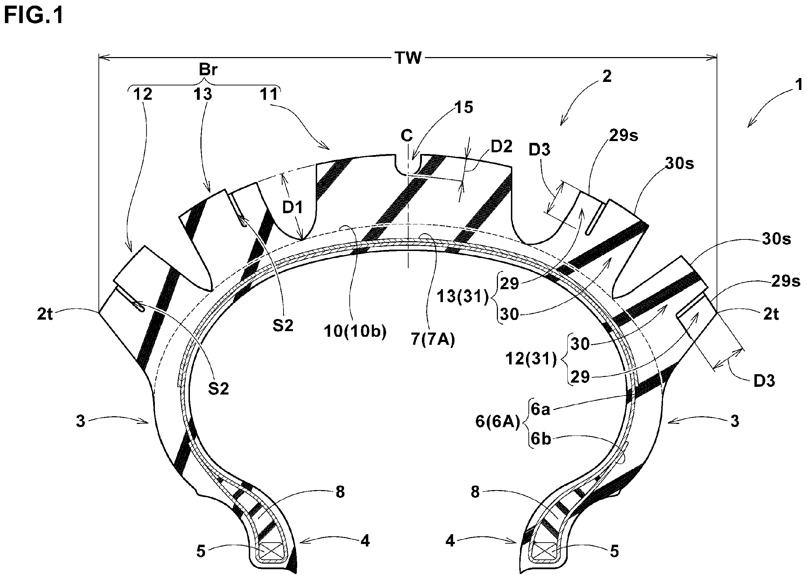

As shown in Fig. 1, the bottom 10b of the sea area of the tread portion 2 has a profile which is curved similarly to the profile of the outer surface of the carcass 6. Here, the "sea area" means the area surrounding the blocks Br and corresponding to the "grooved area" of the tread portion of a tire for passenger cars, truck/bus and the like. Since the land ratio (Sb/S) is small as explained above, the term "sea" is used instead of "groove".

In this embodiment, the blocks Br have heights D1 in a range of from 10 to 20 mm from the bottom 10b.

The blocks Br include crown blocks 11, shoulder blocks 12 and middle blocks 13. The crown block 11 is a block of which most part exists in a tread central region Cr. The shoulder block 12 is a block of which most part exists in a tread shoulder region Sh. The middle block 13 is a block of which most part exists in a middle region Md.
Here, the "most part" means at least 80 % of the area of the top face of the concerned block. The tread central region Cr is centered on the tire equator C and has a developed width of 25 % of the developed tread width Twe. The tread shoulder region sh extends from each tread edge 2t toward the tire equator and has a developed width of 12.5 % of the developed tread width TWe. The middle region Md is a region between the tread central region Cr and the tread shoulder region Sh.

The blocks Br in this embodiment form a bidirectional tread pattern. Fig. 2A shows an example of the tread pattern. Fig. 2B shows a modification thereof in which the arrangement of the middle blocks 13 is changed. These tread patterns will be explained later.

The crown block 11 has an aspect ratio (L/W) less than those of the middle block 13 and shoulder block 12.

Here, the aspect ratio (L/W) of a block is a ratio between the circumferential distance (L) between the extreme circumferential ends of the block and the axial distance (W) between the extreme axial ends of the block.

In the crown block 11 in this embodiment, the shape in the top view is generally rectangular, and the aspect ratio (L/W) is less than 1 in order to increase the axial component of the edges and thereby to improve the braking performance and traction performance during straight running.
In order to effectively derive this advantageous effects, the aspect ratio (L/W) of the crown blocks 11 is preferably set in a range of not less than 0.30, more preferably not less than 0.35, but not more than 0.70, more preferably not more than 0.65, and the width W of the crown blocks 11 is preferably set in a range of not less than 20 %, more preferably not less than 25 %, but preferably not more than 40 %, more preferably not more than 35 % of the developed tread width TWe.

The shoulder block 12 has an aspect ratio larger than those of the crown block 11 and middle block 13.

In the shoulder block 12 in this embodiment, the shape in the top view is generally rectangular, and the aspect ratio (L/W) is more than 1 in order to increase the circumferential component of the edges and thereby to improve the cornering performance. Based on this standpoint, the aspect ratio (L/W) is preferably 1.20 to 1.80. Preferably, the circumferential distance (L) is about 7 to 24 % of the developed tread width TWe.

The middle block 13 has an aspect ratio (L/W) which is more than the aspect ratio of the crown blocks 11 and less than the aspect ratio of the shoulder block 12.

In the middle block 13 in this embodiment, the shape in the top view is generally rectangular, and the aspect ratio (L/W) is about 0.85 to 1.45 in order to improve straight running performance and cornering performance in a well balanced manner. Preferably, the length L is about 8 to 25 % of the developed tread width TWe.

The above-mentioned bottom 10b of the sea area (grooved area) is provided between every two adjacent crown blocks 11 with a recess 26 in order to reduce the rigidity of the under tread in the tread crown portion and thereby to improve the envelope effect and the mud self-ejecting effect.

The above-mentioned crown block 11 is provided in a central part in the tire axial direction, of the top face with a circumferentially extending slot 15 so as to define two subdivided block pieces 16 one on each side of the slot 15.

The width W1 of the slot 15 is preferably not less than 5 %, more preferably not less than 10 %, but not more than 25 %, more preferably not more than 20 % of the width W of the crown blocks 11.
The depth D2 of the slot 15 is preferably not less than 5 %, more preferably not less than 15 %, but not more than 50 %, more preferably not more than 40 % of the groove depth D1.

Therefore, the slots 15 can reduce the bending rigidity of the block to increase the ground contact of the block and can increase the circumferential component of the edges of the block to improve the cornering grip performance.
If the width W1 of the slot 15 is less than 5 % of the width W, it is difficult to reduce the bending rigidity. If the width W1 is more than 25 % of the width W, the bending rigidity is excessively decreased, and the traction performance and braking performance during straight running are deteriorated.

In this embodiment, as shown in Fig. 2A and Fig. 2B, the crown blocks 11 include nonshifted blocks 21 and shifted blocks 22.

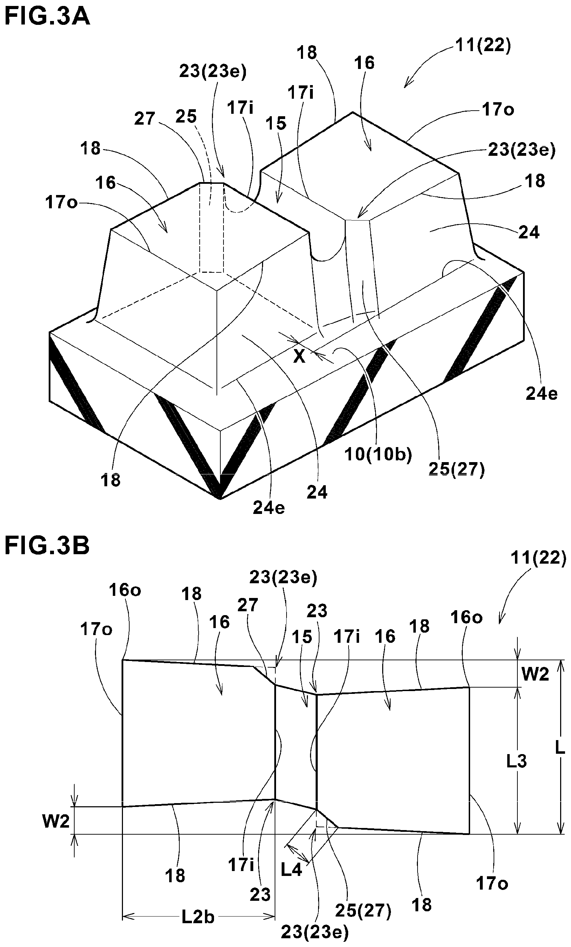

The shifted block 22 is such that, as shown in Fig. 3A and Fig. 3B, the two block pieces 16 are circumferentially shifted from each other. Here, the entirety of the block piece is shifted, and the part between the two block pieces 16 extends obliquely when viewed from the upside.

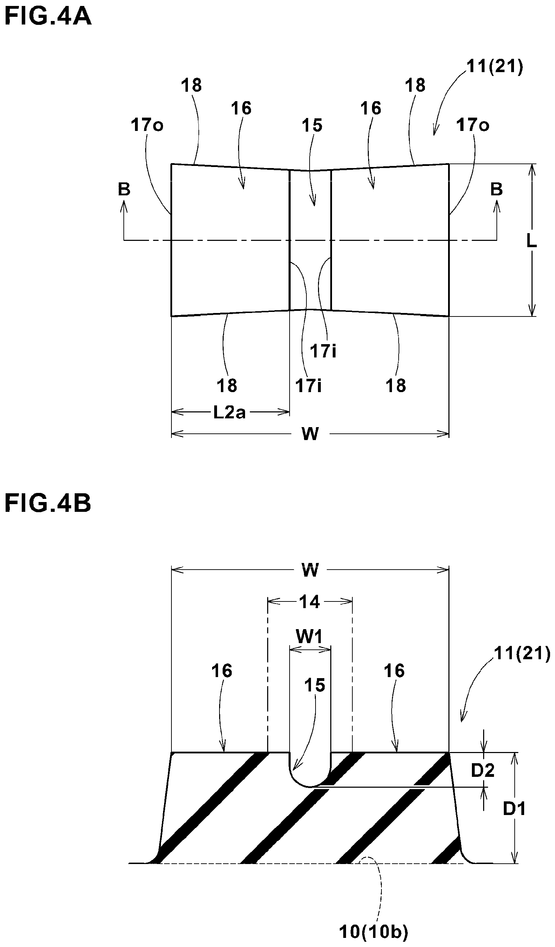

The nonshifted block 21 is such that, as shown in Fig. 4A and Fig. 4B, the two block pieces 16 are not shifted from each other.

In the nonshifted block 21, the top face of each of the block pieces 16 has an inside circumferential edge 17i on the slot 15 side, an outside circumferential edge 17o on the opposite side and a pair of axial edges 18 extending therebetween to have a substantially rectangular shape or a substantially trapezoidal shape.
In the nonshifted block 21 in this embodiment, the block pieces 16 are symmetric about the widthwise center line of the slots 15.

In the shifted block 22, as shown in Fig. 3B, the circumferential shift W2 between the extreme circumferential ends 16o (on the same side) of the respective block pieces 16 is preferably set in a range of not less than 5 %, more preferably not less than 10 %, but not more than 35 %, more preferably not more than 30 % of the circumferential length L of the shifted block 22.

In the shifted block 22, due to the sift, each of the block piece 16 is provided with a circumferentially protruding external corner 23e between the inside circumferential edge 17i and one of the axial edges 18.

By the circumferentially protruding external corners 23e, the shifted block 22 can increase the circumferential component of the block edges which is effective during cornering, without increasing the ground contacting area of the block. Thus, the traction performance and braking performance during straight running are improved, without sacrificing the ride comfort and ground contact feeling.

In this example, the circumferentially protruding external corner 23e is chamfered. As shown in Fig. 3A and Fig. 3B, the length L4 of the chamfered surface 27 is preferably not less than 1.0 mm, more preferably not less than 2.0 mm, but not more than 5.0 mm, more preferably not more than 4.0 mm.

It is preferable that the length L3 of each of the block pieces 16 of the shifted block 22 measured in parallel with the tire circumferential direction is gradually increased from the inside circumferential edge 17i to the outside circumferential edge 17o in order to improve the cornering performance.

In order to effectively derive the advantageous effects of the shifted block 22, the number Gs of the shifted blocks 22 is preferably not less than 40 %, more preferably not less than 50 %, but not more than 90 %, more preferably not more than 80 % of the total number Gt of the crown blocks 11 (the number Gs + the number Gp of the nonshifted block 21).

Further, it is preferable that the shifted blocks 22 include a first shifted block 22A and a second shifted block 22B in which the circumferentially shifting direction of the block pieces 16 is opposite from that in the first shifted block 22A.

It is preferable that the number Gs1 of the first shifted blocks 22A is the same as the number Gs2 of the second shifted block 22B. Preferably, the first shifted blocks 22A and the second shifted block 22B are disposed alternately in the tire circumferential direction.
More preferably, in the sequence of the crown blocks 11, at least two nonshifted blocks 21 are arranged successively in the tire circumferential direction, and also at least two shifted blocks 22 are arranged successively in the tire circumferential direction. In other words, a plurality of groups 22g each consisting of two or more shifted blocks 22 and a plurality of groups 21g each consisting of two or more nonshifted blocks 21 are arranged circumferentially of the tire.
In the example shown in Fig. 2A, the groups 22g each consisting of four shifted blocks 22 and the groups 21g each consisting of two nonshifted blocks 21 are arranged alternately in the tire circumferential direction.
Therefore, the distributions of the circumferential and axial components of the block edges in the tire circumferential direction are evened, and possible variations in the traction performance and braking performance during straight running and cornering performance can be lessened.

It is preferable that the axial width of the nonshifted blocks 21 is less than the axial width of the shifted blocks 22. As a result, the ground pressure of the nonshifted blocks 21 is increased, and the digging of the nonshifted blocks 21 into the ground is increased, therefore, the traction performance and braking performance during straight running are improved. Thus, straight running stability can be improved.

Preferably, the axial length L2b of each of the block pieces 16 of the shifted block 22 is more than 100 %, more preferably not less than 120 %, but not more than 150 %, more preferably not more than 140 % of the axial length L2a of the block pieces 16 of the nonshifted block 21 in order to compensate for a decrease in the length of the axial edge 18 due to the chamfer 27.
If more than 150 %, the block pieces 16 are increased in the ground contacting area, and there is a possibility that the digging into the ground becomes insufficient.

The middle blocks 13 and the shoulder blocks 12 include cut blocks 31. In this embodiment, all of the middle blocks 13 and the shoulder blocks 12 are cut blocks 31.

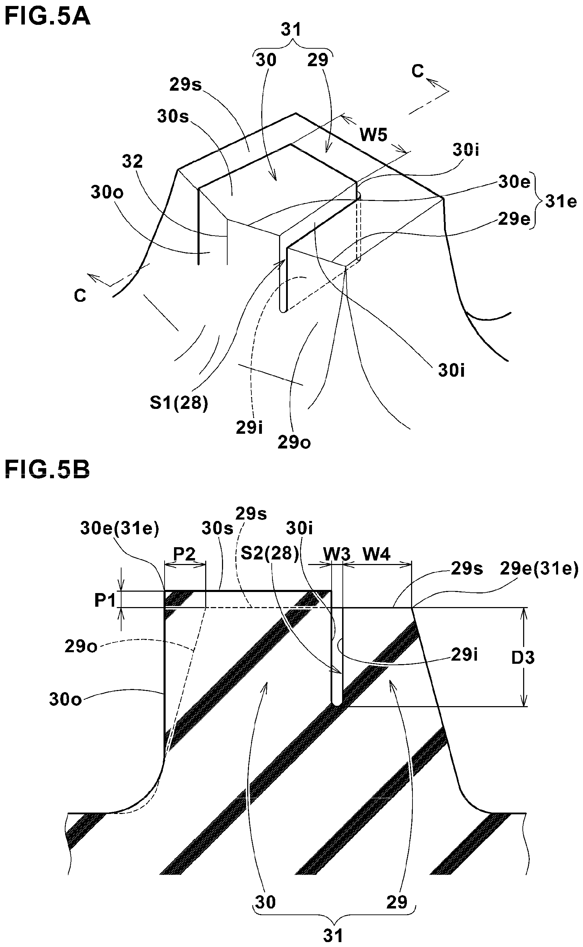

Fig. 5A and Fig. 5B show an example of the cut block 31 used in this embodiment.

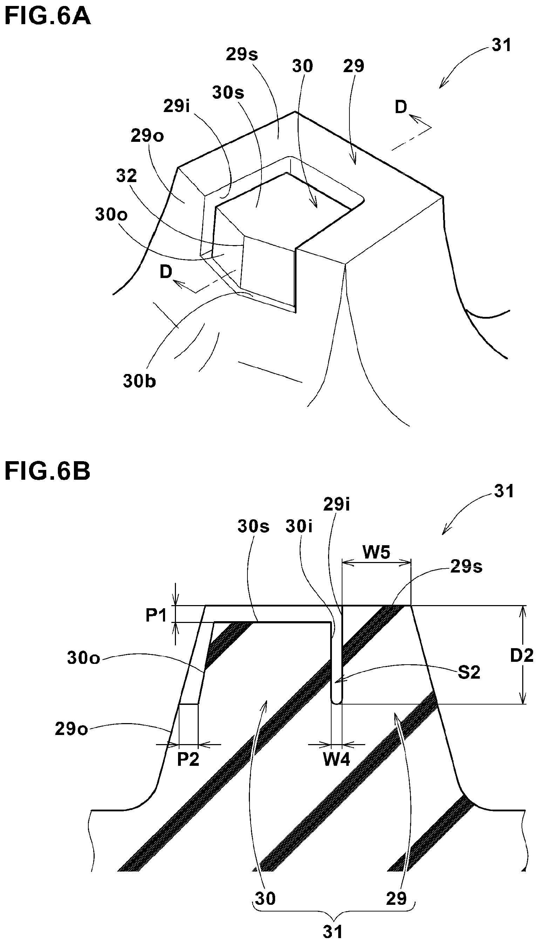

Fig. 6A and Fig. 6B show another example of the cut block 31 which can be used in this embodiment instead of the former example or in combination with the former example.

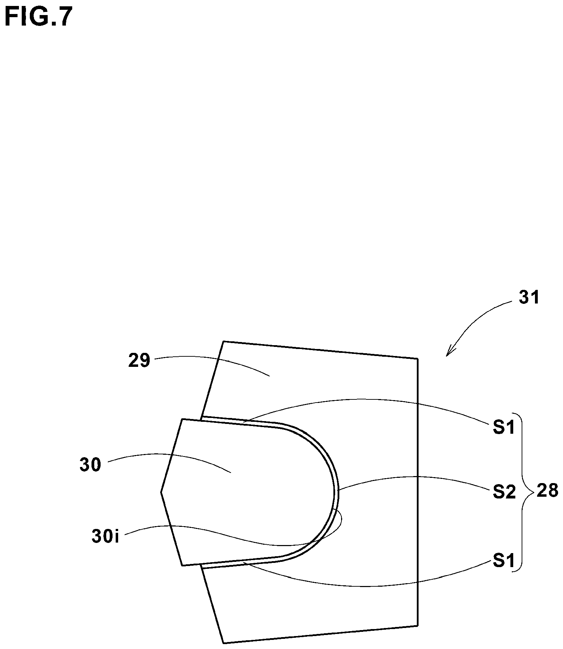

Fig. 7 shows another example of the configuration of the U-shaped cut 28 of the cut block 31, which can be used instead of the angled U-shaped cut 28 used in the cut block 31 shown in Fig. 5A and Fig. 5B or the cut block 31 shown in Fig. 6A and Fig. 6B.

The cut block 31 is provided with a single U-shaped cut 28 opened at the top face and a side face of the block to form an inside part 30 inside the U-shaped cut 28 and a U-shaped outside part 29 outside the U-shaped cut 28.

The U-shaped cut 28 is made up of a pair of first parts S1 extending from an edge 31e toward the opposite edge and terminating within the block, and a second part S2 extending between the terminated ends of the first parts S1.

In the top view of the U-shaped cut 28, the first parts S1 are substantially straight. In this embodiment, the second part S2 is substantially straight as shown in Fig. 5A, Fig. 5B, Fig. 6A and Fig. 6B. But, the second part S2 may be curved like a circular arc as shown in Fig. 7 to prevent uneven wear of the inner side face 30i of the inside part. In the example shown in Fig. 7, the second part S2 is substantially a half circle.

Therefore, by the U-shaped cut 28, the edges of the cut block 31 are increased in the components in various directions. As a result, it becomes possible to improve the stability and controllability, without increasing the volume and hardness of the block, and thereby the ride comfort, ground contact feeling and skid control can be prevented from deteriorating.

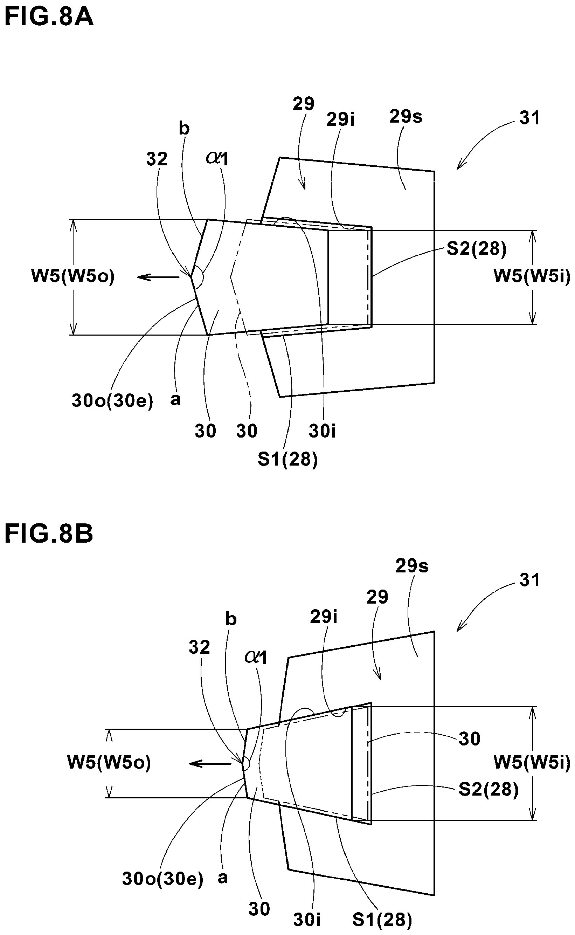

The width W5 or distance between the first parts S1 of the cut can be gradually decreased from the outside to the inside of the cut block as shown in Fig. 8A or gradually increased as shown in Fig. 8B.

In the case of the cut block 31 as shown in Fig. 8A, the inside part 30 can move largely toward the direction to which the U-shape of the U-shaped cut 28 opens.
such cut block 31 is suitably used as the middle block with the inside part 30 oriented toward the axially outside. Such middle block can improve transient property when leaning the motorcycle, and thereby stability and controllability can be improved. Preferably, the width W5o at the outside ends of the first parts S1 is not less than 105 %, more preferably not less than 110 %, but not more than 150 %, more preferably not more than 130 % of the width W5i at the inside ends of the first parts S1.

In the case of the cut block 31 as shown in Fig. 8B, the movement of the inside part 30 toward the direction to which the U-shape of the U-shaped cut 28 opens is limited. Such cut block 31 is suitably used as the shoulder block with the inside part 30 oriented toward the axially inside. Such shoulder block has a relatively high rigidity, and helps to converge the leaning linearly.
Preferably, the width W5o at the outside ends of the first parts S1 is not less than 40 %, more preferably not less than 50 %, but not more than 95 %, more preferably not more than 80 % of the width W5i at the inside ends of the first parts S1.

The width W3 of the U-shaped cut 28 is preferably not less than 0.5 mm, more preferably not less than 1.0 mm, but not more than 3.0 mm, more preferably not more than 2.0 mm. The depth D3 of the U-shaped cut 28 is preferably not less than 0.5 mm, more preferably not less than 1.0 mm, but not more than 5.0 mm, more preferably not more than 4.0 mm.
If the width W3 of the U-shaped cut 28 is less than 0.5 mm, the friction between the outside part 29 and inside part 30 increases, and the inside part 30 becomes hard to move. If the width W3 is more than 3.0 mm, there is a possibility that the rigidity of the cut block 31 becomes insufficient.

when all of the middle blocks 13 and the shoulder blocks 12 are the cut blocks 31 oriented as shown in Fig. 2A and Fig. 2B, it is preferable that the depth D3 of the cut 28 of the middle block 13 is more than the depth D2 of its slot 15, and the depth D3 of the cut 28 of the shoulder block 12 is more than the depth D2 of its slot 15 and less than the depth D3 of the cut 28 of the middle block 13.
Therefore, as the rigidity of the middle blocks 13 is relatively decreased, the leaning speed of the motorcycle from a straight running state to a fully leant state is improved and thereby cornering performance can be improved. Further, as the rigidity of the shoulder blocks 12 is increased when compared with the middle blocks 13, the leaning converges linearly in a fully leant state, and stability and controllability are improved.

It is preferable that the top face 30s of the inside part 30 has a four-sided or five-sided shape, and the inside part 30 is oriented such that the top face 30s has an edge substantially parallel with the tire circumferential direction, and a pair of opposite edges substantially or almost parallel with the axial circumferential direction.

It is preferable that, as shown in Fig. 5A and Fig. 5B, the top face 30s of the inside part 30 protrudes radially outwardly from the top face 29s of the outside part 29.

Further, it is preferable that the inside part 30 protrudes from the outside part 29 in a lateral direction such that an outer side face 30o of the inside part 30 which extends radially inwardly from a part 30e of the edge 31e protrudes from a side face 29o of the outside part 29 which extends radially inwardly from a part 29e of the edge 31e.

The protruding amount P1 of the top face 30s of the inside part 30 from the top face 29s of the outside part 29 is preferably not less than 0.3 mm, more preferably not less than 1.0 mm, but not more than 3.0 mm, more preferably not more than 2.0 mm.

The protruding amount P2 of the side face 30o of the inside part from the side face 29o of the outside part is preferably not less than 0.3 mm, more preferably not less than 1.5 mm, but not more than 3.0 mm, more preferably not more than 2.5 mm.

The protruding amount P1, P2 refers to the maximum if the protruding amount varies.

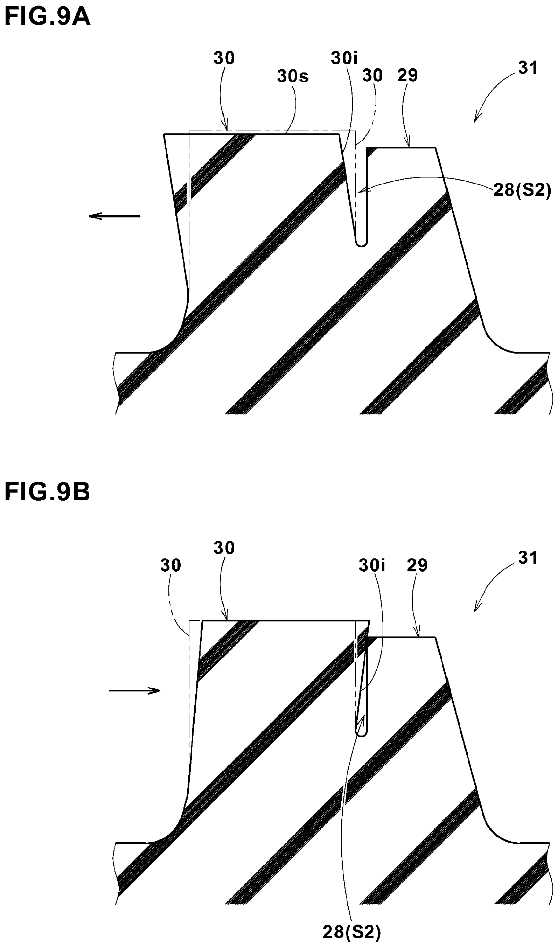

Fig. 9A and Fig. 9B show the inside part 30 moved toward the outside and inside of the block.

when the inside part 30 is moved toward the outside of the block, the cut block 31 is increased in the effectively edge length. Further, the sinking of the top face 30s due to the movement can be prevented since the top face 30s of the inside part 30 is protruded in advance. Therefore, the traction is increased, and stability and controllability can be improved.

When the inside part 30 is moved toward the inside of the block, the movement of the inside part 30 is stopped at the outside part 29, and the rigidity of the block as a whole in this moving direction is increased.

If the protruding amount P1 is less than 0.3 mm, the outward movement of the inside part 30 is lessened, and it becomes difficult to increase the effective edge length. If the protruding amount P1 is more than 3.0 mm, the ground contact of the outside part 29 decreases, and the stability and controllability are deteriorated.

In the top face 29s of the outside part 29 in this embodiment, a width W4 from the second part S2 to the opposite edge 29e is preferably not less than 3.0 mm, more preferably not less than 5.0 mm, but not more than 8.0 mm, more preferably not more than 7.0 mm, and
a width W5 of the inside part 30 between the first parts S1 is preferably not less than 5.0 mm, more preferably not less than 7.0 mm, but not more than 12.0 mm, more preferably not more than 10.0 mm.

In order to improve the stability and controllability, the outer side face 30o of the inside part 30 is, as shown in Figs.8A and 8B, formed as a V-shaped surface 32 of two planes a and b intersecting each other at the outwardly protruding ridge of the V-shaped surface 32. In other words, the top face 30s of the inside part 30 has a five-sided shape.

The interior angle α1 between the two planes a and b, namely, the intersecting angle is preferably not less than 100 degrees, more preferably not less than 110 degrees, but not more than 160 degrees, more preferably not more than 150 degrees. If the interior angle α1 is less than 100 degrees, the rigidity of the outwardly protruding ridge of the V-shaped surface 32 is decreased, and it becomes difficult to improve the stability and controllability. If the interior angle α1 is more than 160 degrees, the outwardly protruding ridge can not exert an edge effect.

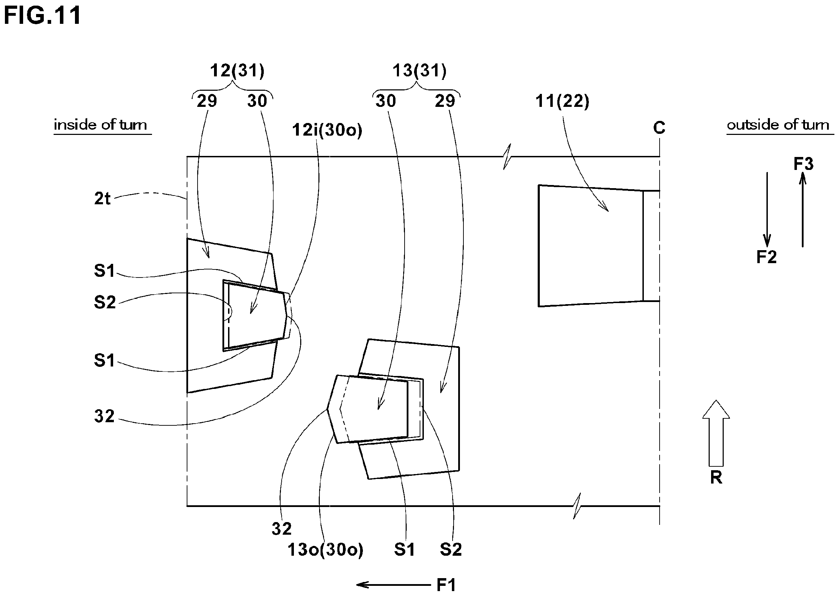

As shown in Fig. 11, in the cut blocks 31 disposed as the middle blocks 13, the first parts S1 extend axially, and the outer side face 30o of the inside part 30 oriented toward the axially outside, defining a part of the axial outer surface 13o of the middle block 13. Therefore, in the middle blocks 13 existing in the ground contacting patch during cornering, the inside part 30 is moved toward the outside of the outside part 29 by a frictional force F1 toward the inside of the turn which is exerted by the road surface. Therefore, the middle block 13 is increased in the effective edge length, and skid performance, grip performance and ground contact feeling can be improved. The middle block 13 can improve transient property when leaning the motorcycle from a vertical state to a fully leant state.

In the cut blocks 31 disposed as the shoulder blocks 12, the first parts S1 extend axially, and the outer side face 30o of the inside part 30 oriented toward the axially inside, defining a part of the axial inner surface 12i of the shoulder block 12.

In the shoulder blocks 12 existing in the ground contacting patch during cornering in a fully leant condition, the inside part 30 is moved toward the inside of the outside part 29 by a frictional force F1 toward the inside of the turn which is exerted by the road surface. Therefore, the inside part 30 unites with the outside part 29, and the rigidity of the block as whole is increased to stabilize the behavior of the motorcycle during cornering. Further, by the inside part 30, the edge length of the shoulder block 12 is increased in its axially inside, therefore, from the initial stage of the leaning in which the middle blocks 13 mainly contact with the ground to a middle stage of the leaning in which the shoulder blocks 12 start to contact with the ground, the grip performance can be improved.

In the tread patterns shown in Fig. 2A and Fig. 2B, the middle blocks 13 are respectively overlap with the recesses 26 in the tire circumferential direction. Thereby, the ground contact of the middle blocks 13 is increased and the stability and controllability can be improved.

In the tread pattern shown in Fig. 2B, the middle blocks 13 disposed in shifted-block-group regions 33 are positioned axially inside the middle blocks 13 disposed outside the shifted-block-group regions 33.
Here, the shifted-block-group region 33 is defined between axial lines Ls drawn passing through the circumferential ends of each of the groups 22g of the shifted blocks 22.
Therefore, when the shifted blocks 22 contact with the ground during straight running, the chance of the middle blocks 13 simultaneously contacting with the ground is increased. Accordingly, during straight running, the blocks' edges contacting with the ground is increased, and the stability and controllability are improved from straight running to the initial stage of cornering.

Further, the middle blocks 13 disposed in nonshifted-block-group regions 34 are positioned axially outside the middle blocks 13 disposed outside the nonshifted-block-group regions 34. Here, the nonshifted-block-group region 34 is defined between axial lines Ls drawn passing through the circumferential ends of each of the groups 21g of the nonshifted blocks 21. Therefore, during straight running, the ground pressure of the nonshifted block 21 is increased, and the traction performance and braking performance during straight running can be improved.

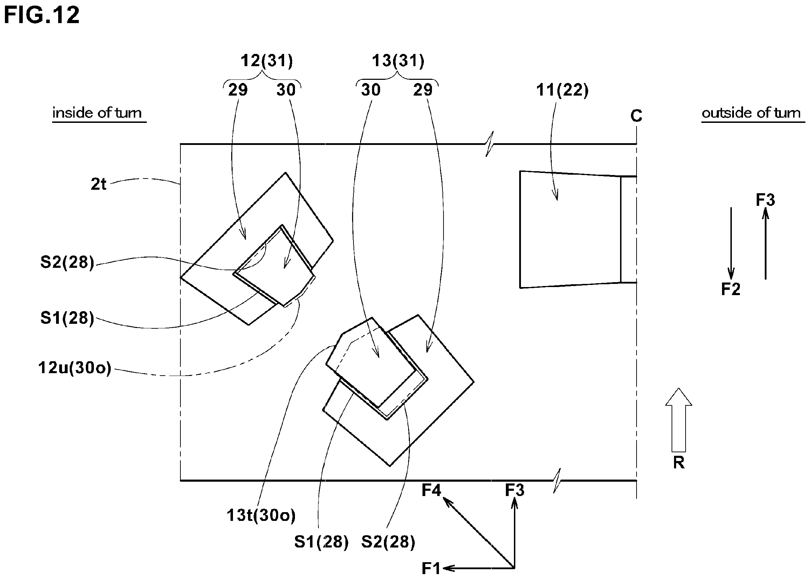

Fig. 12 shows another example of the arrangement of the cut blocks 31 as the middle blocks 13 and shoulder blocks 12.

In this example, the cut blocks 31 (of the Fig. 8A type) as the middle blocks 13 are arranged such that the outer side face 30o of the inside part 30 is oriented toward the axially outside and toward the intended tire rotational direction R, so that the first parts S1 extend obliquely. Therefore, by the resultant force F4 of a frictional force F1 toward the inside of the turn exerted during cornering and a frictional force F3 exerted during deceleration, the inside part 30 can moved toward the outside of the block to increase the traction.

Further, the cut blocks 31 (of the Fig. 8B type) as the shoulder blocks 12 are arranged such that the outer side face 30o of the inside part 30 is oriented toward the axially inside and toward the opposite direction to the intended tire rotational direction R, so that the first parts S1 extend obliquely. Therefore, by the resultant force F4, the inside part 30 can moved toward the inside of the block and the movement is limited during cornering in a fully lean condition to improve the stability and controllability.

In the cut block 31 shown in Fig. 6A and Fig. 6B, the top face 29s of the outside part 29 protrudes radially outwardly from the top face 30s of the inside part 30, and the outer side face 29o of the outside part 29 protrudes laterally from the outer side face 30o of the inside part 30.
since the inside part 30 is surrounded by the outside part 29, uneven wear of the inside part 30 can be prevented.

As further examples of the cut block 31, the following designs are also possible:
a design in which the top face 29s of the outside part 29 protrudes from the top face 30s of the inside part 30, and the outer side face 30o of the inside part 30 protrudes from the outer side face 30o of the outside part 29; and
a design in which the top face 30s of the inside part 30 protrudes from the top face 29s of the outside part 29, and the outer side face 29o of the outside part 29 protrudes from the outer side face 30o of the inside part 30.

In any case, the protruding amount P1 relating to the top faces 29s and 30s is preferably not less than 0.3 mm, more preferably not less than 1.0 mm, but not more than 3.0 mm, more preferably not more than 2.0 mm. The protruding amount P2 relating to the side faces 29o and 30o is preferably not less than 0.3 mm, more preferably not less than 1.5 mm, but not more than 3.0 mm, more preferably not more than 2.5 mm. The protruding amount P1, P2 refers to the maximum if the protruding amount varies.

### Comparison Tests

off-road motorcycle tires having the internal structure shown in Fig. 1 and blocks showing in Table 1 were prepared and tested by the use of a 450cc motocross bike.

Common specifications are as follows.
tire size:
   front: 90/100-21 (wheel rim: 1.60x21, pressure: 80 kPa)
   rear: 120/80-19 (wheel rim: 2.15x19, pressure: 80 kPa)
axial tread width TW: 145 mm
developed tread width TWe: 175 mm
tread depth (block height) D1: 15 mm
land ratio (Sb/S): 0.25
crown block:
   aspect ratio (L/W=20mm/40mm): 0.50
   W/TWe: 0.23
middle block:
   aspect ratio (L/W=25mm/20mm): 1.25
   W/TWe: 0.11
shoulder block :
   aspect ratio (L/W=25mm/20mm): 1.25
   W/TWe: 0.11
cut block:
   width W4 of outside part: 4.0 to 6.0 mm
   width W5 of inside part: 9.0 to 11.0 mm
   U-shaped cut:
   width W3: 1.0 mm
   depth D3: 3.0 mm

Comparative example Ref.1: The crown blocks were nonshifted blocks, and the middle blocks and shoulder blocks were blocks similarly to cut blocks but no cut was provided.
Comparative example Ref.2: The crown blocks were shifted blocks, and the middle blocks and shoulder blocks were blocks similarly to cut blocks but no cut was provided.
Comparative example Ref.3: The middle blocks and shoulder blocks were cut blocks, and the crown blocks were blocks similarly to nonshifted blocks but no slot was provided.

In the test, during running on a motocross course, traction performance during straight running, grip performance and skid performance during cornering, ride comfort, and ground contact feeling were evaluated into ten ranks by the test rider. The results are indicated in Table 1, wherein the higher the rank number, the better the performance.

From the test results, it was confirmed that, according to the present invention, the traction performance during straight running and the grip performance and skid performance during cornering, which give an indication of the stability and controllability, can be improved, while maintaining the ride comfort and ground contact feeling.

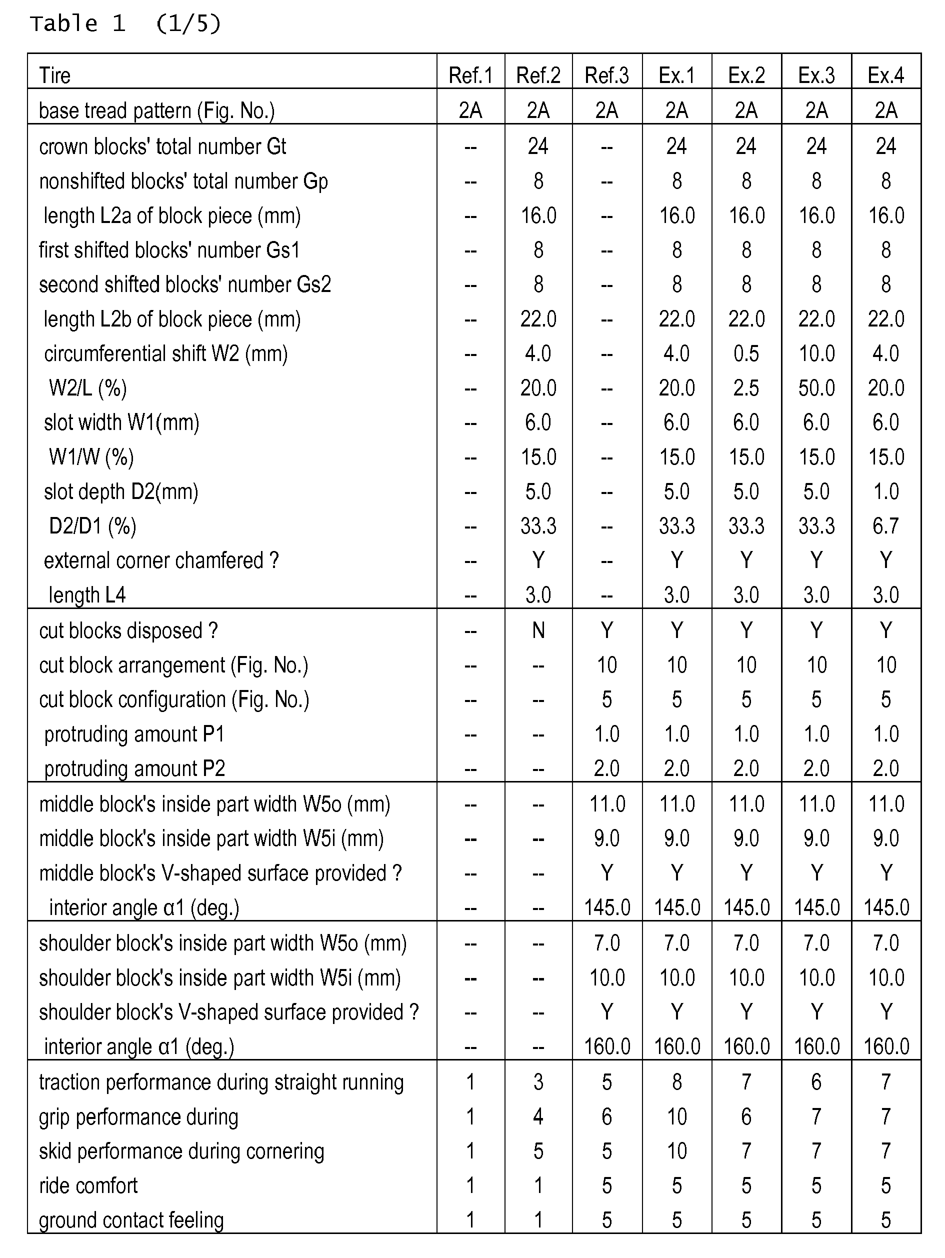

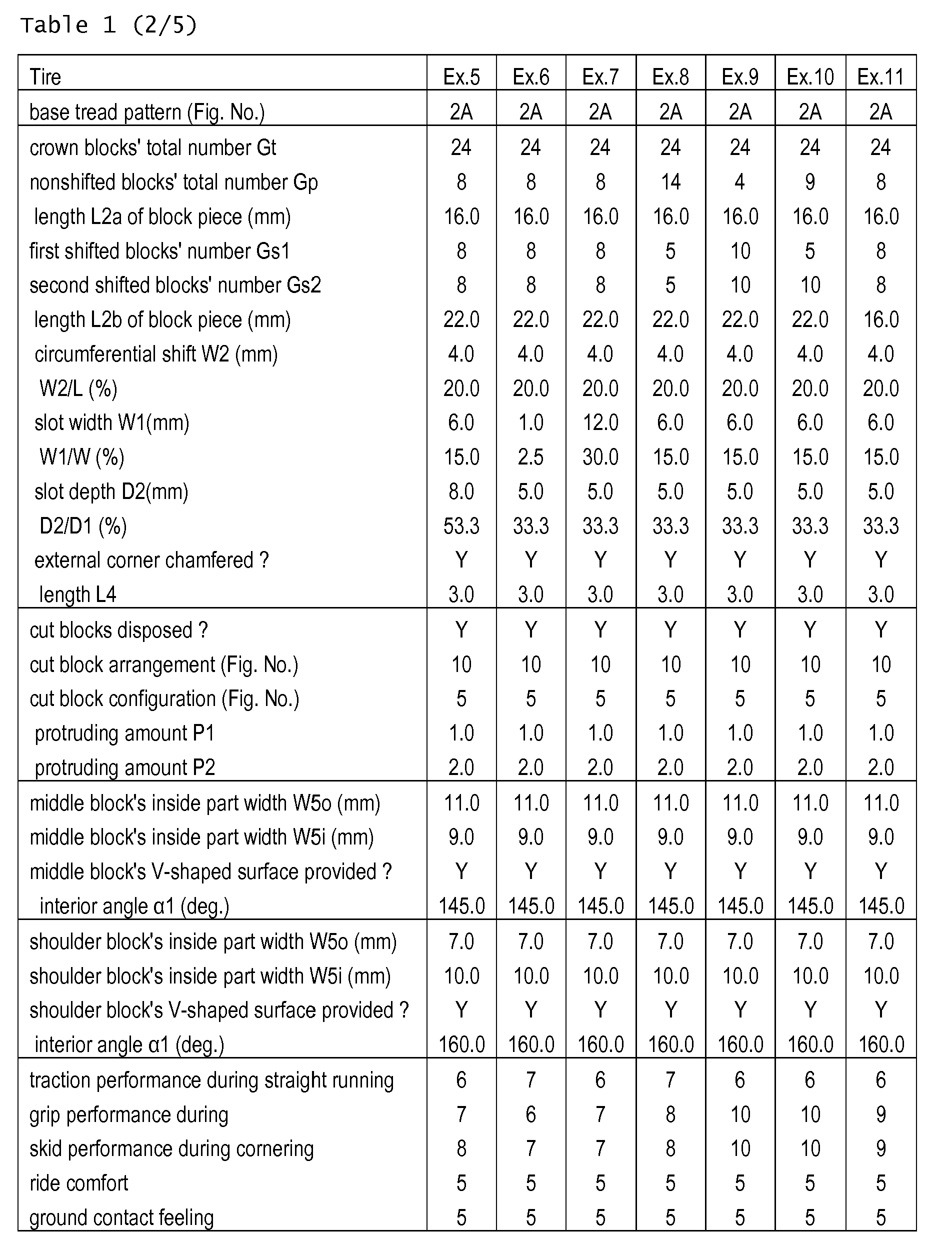

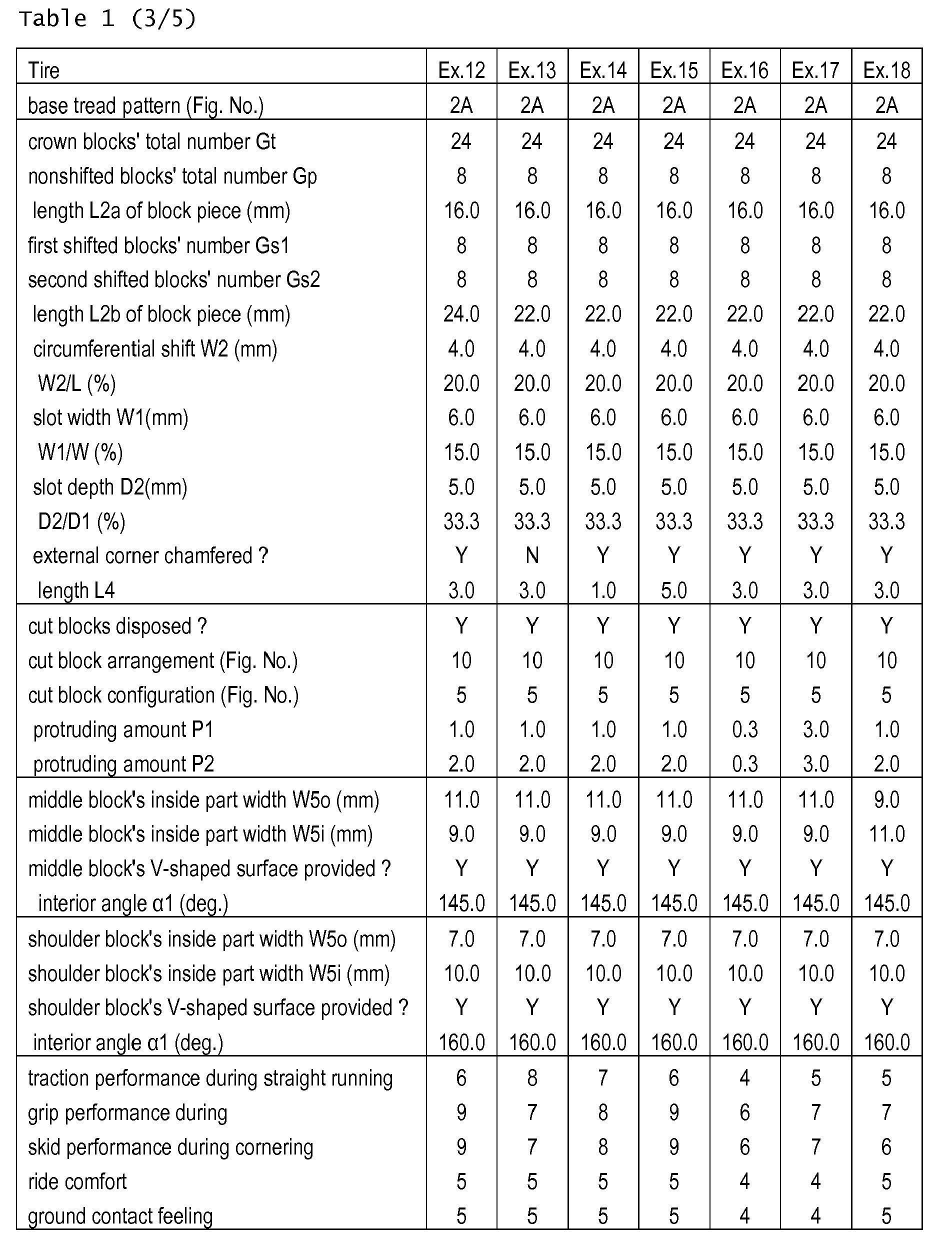

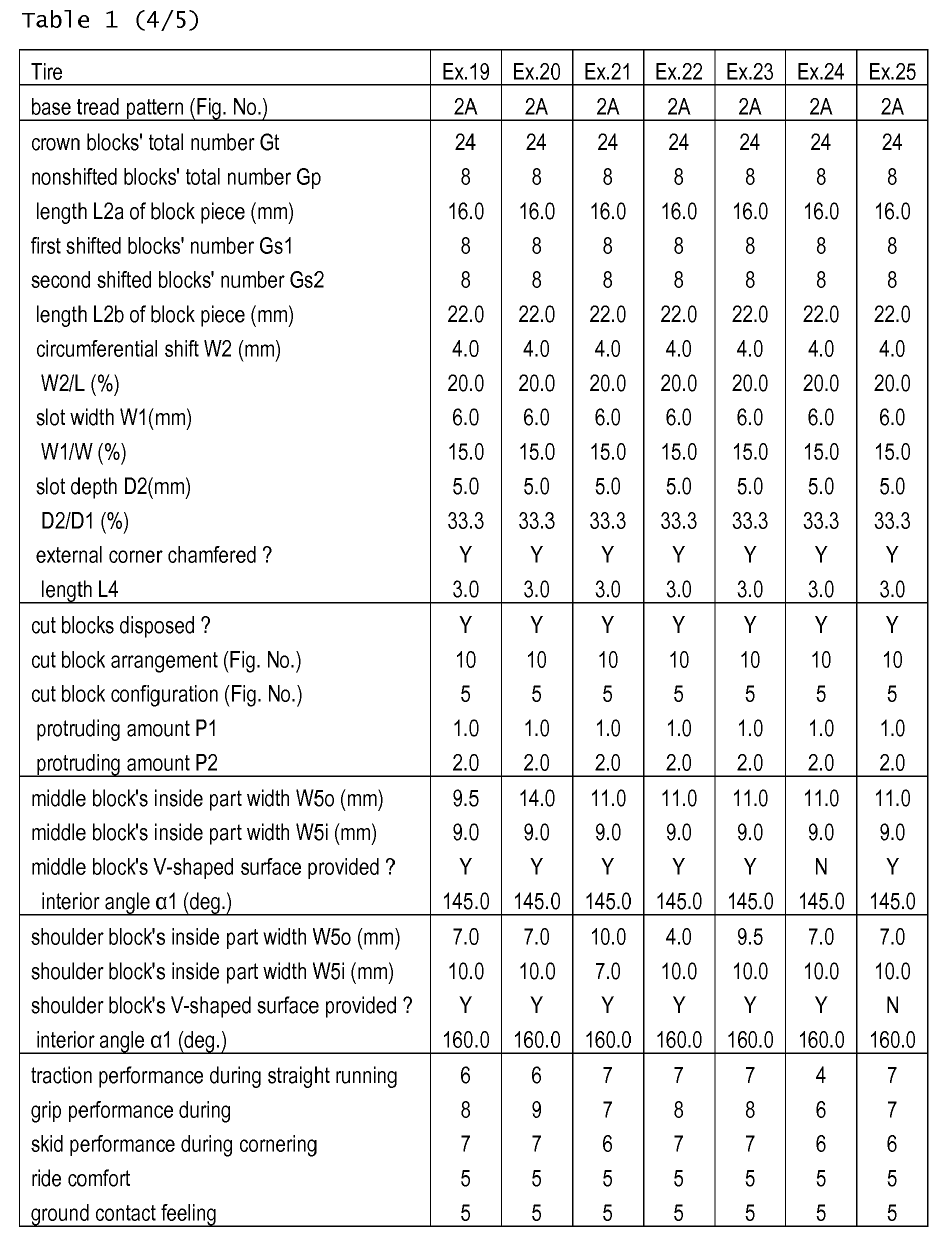

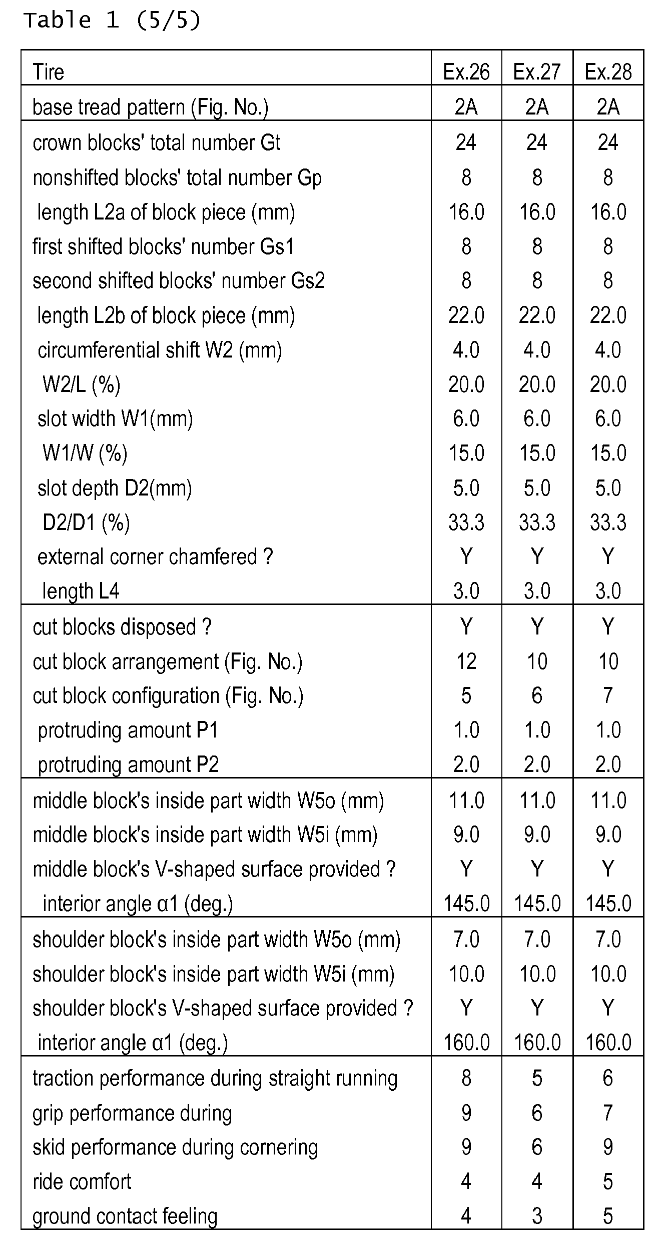

## Claims

1. A pneumatic tire (1) for running on rough terrain comprising
a tread portion (2) provided with blocks (Br) including crown blocks (11) disposed in a tread crown region (cr), shoulder blocks (12) disposed in a pair of tread shoulder regions (Sh), and middle blocks (13) disposed in tread middle regions (Md) between the tread crown region (Cr) and the tread shoulder regions (Sh),
the crown blocks (11) each having an aspect ratio less than an aspect ratio of each of the middle blocks (13) and less than an aspect ratio of each of the shoulder blocks (12), wherein the aspect ratio is a ratio of the circumferential distance (L) between the extreme circumferential ends of the block (Br) to the axial distance (w) between the extreme axial ends of the block (Br),
the middle blocks (13) and the shoulder blocks (12) including cut blocks (31), wherein the cut block (31) is provided with a U-shaped cut (28) opened at the top face and a side face of the cut block (31),
**characterized in that**
the crown blocks (11) include shifted blocks (22),
wherein the shifted block (22) is provided in its central portion in the tire axial direction with a slot (15) extending in the tire circumferential direction to form two subdivided block pieces (16) one on each side of the slot (15), and the two block pieces (16) are circumferentially shifted from each other, and
the shifted blocks (22) include a first shifted block (22A) and a second shifted block (22B) in which the circumferentially shifting direction of its two block pieces (16) is opposite from that in the first shifted block (22A).

2. The pneumatic tire according to claim 1, wherein
the crown blocks (11) are arranged in the tread crown region (Cr) so that the arrangement includes a plurality of groups (22g) each consisting of two or more shifted blocks (22) arranged successively in the tire circumferential direction, and
the middle blocks (13) disposed in shifted-block-group regions (33) are positioned axially inside the middle blocks (13) disposed outside the shifted-block-group regions (33), wherein the shifted-block-group region (33) is defined between two axial lines (Ls) drawn passing through the circumferential ends of each of the groups (22g) of the shifted blocks (22).

3. The pneumatic tire according to claim 1 or 2, wherein
the crown blocks (11) including nonshifted blocks (21), wherein the nonshifted block (21) is provided in its central portion in the tire axial direction with a slot (15) extending in the tire circumferential direction to form two subdivided block pieces (16) one on each side of the slot (15), and the two block pieces (16) are not shifted from each other in the tire circumferential direction,
the crown blocks (11) are arranged in the tread crown region (Cr) so that the arrangement includes a plurality of groups (21g) each consisting of two or more nonshifted blocks (21) arranged successively in the tire circumferential direction,
the middle blocks (13) disposed in nonshifted-block-group regions (34) are positioned axially outside the middle blocks (13) disposed outside the nonshifted-block-group regions (34), wherein the nonshifted-block-group region (34) is defined between two axial lines (Ls) drawn passing through the circumferential ends of each of the groups (21g) of the nonshifted blocks (21).

4. The pneumatic tire according to claim 3, wherein
the nonshifted blocks (21) have an axial width (W) which is smallest in the crown blocks (11).

5. The pneumatic tire according to any one of claims 1-4, wherein
the shifted blocks (22) have an axial width (2) which is largest in the crown blocks (11).

6. The pneumatic tire according to any one of claims 1-5, wherein
the tread portion (2) is provided in its bottom with a recess (26) disposed between every two of the circumferentially adjacent crown blocks (11).

7. The pneumatic tire according to claim 6, wherein
the middle blocks (13) overlap with the recess (26) in the tire circumferential direction.

8. The pneumatic tire according to any one of claims 1-7, wherein
the cut blocks (31) as the middle blocks (13) are oriented such that the U-shape of the U-shaped cut (28) opens toward the axially outside, and
the cut blocks (31) as the shoulder blocks (12) are oriented such that the U-shape of the U-shaped cut (28) opens toward the axially inside.

9. The pneumatic tire according to any one of claims 1-8, wherein
in the cut blocks (31) as the middle blocks (13), the depth (D3) of the U-shaped cut (28) is more than the depth (D2) of the slot (15), and
in the cut blocks (13) as the shoulder blocks (12), the depth (D3) of the U-shaped cut (28) is more than the depth (D2) of the slot (15) and less than the depth (D2) of the U-shaped cut (28) in the middle blocks (13).

## Patentansprüche

1. Luftreifen (1) zur Fahrt auf rauem Gelände, umfassend
einen Laufflächenabschnitt (2), der mit Blöcken (Br) versehen ist, die Kronenblöcke (11), die in einem Laufflächenkronenbereich (Cr) angeordnet sind, Schulterblöcke (12), die in einem Paar Laufflächenschulterbereichen (Sh) angeordnet sind, und mittlere Blöcke (13) umfassen, die in Laufflächenmittelbereichen (Md) zwischen dem Laufflächenkronenbereich (Cr) und den Laufflächenschulterbereichen (Sh) angeordnet sind,
wobei die Kronenblöcke (11) jeweils ein Aspektverhältnis aufweisen, das kleiner ist als ein Aspektverhältnis eines jeden der mittleren Blöcke (13) und kleiner ist als ein Aspektverhältnis eines jeden der Schulterblöcke (12), wobei das Aspektverhältnis ein Verhältnis des Umfangsabstandes (L) zwischen den äußersten Umfangsenden des Blockes (Br) zu dem axialen Abstand (W) zwischen den äußersten axialen Enden des Blockes (Br) ist,
die mittleren Blöcke (13) und die Schulterblöcke (12) Schnittblöcke (31) umfassen, wobei der Schnittblock (31) mit einem U-förmigen Schnitt (28) versehen ist, der an der Oberseitenfläche und der Seitenfläche des Schnittblockes (31) geöffnet ist,
**dadurch gekennzeichnet, dass**
die Kronenblöcke (11) verschobene Blöcke (22) umfassen, wobei der verschobene Block (22) in seinem zentralen Abschnitt in der axialen Richtung des Reifens mit einem Schlitz (15) versehen ist, der sich in der Umfangsrichtung des Reifens erstreckt, um zwei unterteilte Blockstücke (16), und zwar einer auf jeder Seite des Schlitzes (15) zu bilden, und die zwei Blockstücke (16) in Umfangsrichtung voneinander verschoben sind, und
die verschobenen Blöcke (22) einen ersten verschobenen Block (22A) und einen zweiten verschobenen Block (22B) umfassen, in welchem die Verschieberichtung in Umfangsrichtung seiner zwei Blockstücke (16) entgegengesetzt zu der in dem ersten verschobenen Block (22A) ist.

2. Luftreifen nach Anspruch 1, wobei
die Kronenblöcke (11) in dem Laufflächenkronenbereich (Cr) angeordnet sind, so dass die Anordnung eine Mehrzahl von Gruppen (22g) umfasst, die jeweils aus zwei oder mehr verschobenen Blöcken (22) bestehen, die nacheinander in der Umfangsrichtung des Reifens angeordnet sind, und
die mittleren Blöcke (13), die in Verschiebungs-Blockgruppenbereichen (33) angeordnet sind, axial innerhalb der mittleren Blöcke (13), die außerhalb der Verschiebungs-Blockgruppenbereiche (33) angeordnet sind, positioniert sind, wobei der Verschiebungs-Blockgruppenbereich (33) zwischen zwei axialen Linien (Ls) definiert ist, die so gezeichnet sind, dass sie durch die Umfangsenden einer jeden der Gruppen (22g) der verschobenen Blöcke (22) verlaufen.

3. Luftreifen nach Anspruch 1 oder 2, wobei
die Kronenblöcke (11) nicht verschobene Blöcke (21) umfassen, wobei der nicht verschobene Block (21) in seinem zentralen Abschnitt in der axialen Richtung des Reifens mit einem Schlitz (15) versehen ist, der sich in der Umfangsrichtung des Reifens erstreckt, um zwei unterteilte Blockstücke (16), und zwar einen auf jeder Seite des Schlitzes (15) zu bilden, und die zwei Blockstücke (16) nicht voneinander in der Umfangsrichtung des Reifens verschoben sind,
die Kronenblöcke (11) in dem Laufflächenkronenbereich (Cr) angeordnet sind, so dass die Anordnung eine Mehrzahl von Gruppen (21g) umfasst, die jeweils aus zwei oder mehr nicht verschobenen Blöcken (21) bestehen, die nacheinander in der Umfangsrichtung des Reifens angeordnet sind,
die mittleren Blöcke (13), die in Nichtverschiebungs-Blockgruppenbereichen (34) angeordnet sind, axial außerhalb der mittleren Blöcke (13), die außerhalb der Nichtverschiebungs-Blockgruppenbereiche (34) angeordnet sind, positioniert sind, wobei der Nichtverschiebungs-Blockgruppenbereich (34) zwischen zwei axialen Linien (Ls) definiert ist, die so gezeichnet sind, dass sie durch die Umfangsenden einer jeden der Gruppen (21g) der nicht verschobenen Blöcke (21) verlaufen.

4. Luftreifen nach Anspruch 3, wobei die nicht verschobenen Blöcke (21) eine axiale Breite (W) aufweisen, die in den Kronenblöcken (11) am kleinsten ist.

5. Luftreifen nach einem der Ansprüche 1-4, wobei die verschobenen Blöcke (22) eine axiale Breite (2) aufweisen, die in den Kronenblöcken (11) am größten ist.

6. Luftreifen nach einem der Ansprüche 1-5, wobei der Laufflächenabschnitt (2) in seinem Grund mit einer Vertiefung (26) versehen ist, die zwischen jeweils zweien der in Umfangsrichtung benachbarten Kronenblöcke (11) angeordnet ist.

7. Luftreifen nach Anspruch 6, wobei die mittleren Blöcke (13) die Ausnehmung (26) in der Umfangsrichtung des Reifens überlappen.

8. Luftreifen nach einem der Ansprüche 1-7, wobei
die Schnittblöcke (31) als die mittleren Blöcke (13) derart orientiert sind, dass die U-Form des U-förmigen Schnittes (28) sich zu der axialen Außenseite hin öffnet, und
die Schnittblöcke (31) als die Schulterblöcke (12) derart orientiert sind, dass die U-Form des U-förmigen Schnittes (28) sich zu der axialen Innenseite hin öffnet.

9. Luftreifen nach einem der Ansprüche 1-8, wobei
in den Schnittblöcken (31) als die mittleren Blöcke (13) die Tiefe (D3) des U-förmigen Schnittes (28) größer ist als die Tiefe (D2) des Schlitzes (15), und
in den Schnittblöcken (13) als die Schulterblöcke (12) die Tiefe (D3) des U-förmigen Schnittes (28) größer ist als die Tiefe (D2) des Schlitzes (15) und kleiner ist als die Tiefe (D2) des U-förmigen Schnittes (28) in den mittleren Blöcken (13).

## Revendications

1. Bandage pneumatique (1) pour circuler sur terrain accidenté, comprenant
une portion formant bande de roulement (2) dotée de blocs (Br) incluant des blocs de couronne (11) disposés dans une région de couronne (Cr) de la bande de roulement, des blocs d'épaulement (12) disposés dans une paire de régions d'épaulement (Sh) de la bande de roulement, et des blocs médians (13) disposés dans des régions médianes (Wd) de la bande de roulement entre la région de couronne (Cr) et les régions d'épaulement (Sh) de la bande de roulement,
les blocs de couronne (11) ont chacun un rapport d'aspect inférieur à un rapport d'aspect de chacun des blocs médians (13) et inférieur à un rapport d'aspect de chacun des blocs d'épaulement (12), dans lesquels le rapport d'aspect est un rapport de la distance circonférentielle (R) entre les extrémités circonférentielles extrêmes du bloc (Br) jusqu'à la distance axiale (W) entre les extrémités axiales extrêmes du bloc (Br),
les blocs médians (13) et les blocs d'épaulement (12) incluant des blocs découpés (31), tels que le bloc découpé (31) est doté d'une découpe en forme de U (28) ouvert au niveau de la face supérieure et d'une face inférieure du bloc découpé (31),
**caractérisé en ce que**
les blocs de couronne (11) incluent des blocs décalés (22), tels qu'un bloc décalé (22) est doté dans sa portion centrale, dans la direction axiale du pneumatique, d'une fente (15) s'étendant dans la direction circonférentielle du pneumatique pour former deux pièces de blocs subdivisés (16), une sur chaque côté de la fente (15), et les deux pièces de blocs (16) sont décalées circonférentiellement l'une par rapport à l'autre, et
les blocs décalés (22) incluent un premier bloc décalé (22A) et un second bloc décalé (22B) dans lesquels la direction de décalage circonférentiel des deux pièces de blocs (16) est opposée de celle dans le premier bloc décalé (22A).

2. Bandage pneumatique selon la revendication 1, dans lequel les blocs de couronne (11) sont agencés dans la région de couronne (Cr) de la bande de roulement, de telle sorte que l'agencement inclut une pluralité de groupes (22g), constitués chacun de deux ou plusieurs blocs décalés (22) et agencés successivement dans la direction circonférentielle du pneumatique, et
les blocs médians (13) disposés dans des régions avec groupes de blocs décalés (33) sont positionnés axialement à l'intérieur des blocs médians (13) disposés à l'extérieur des régions avec groupes de blocs décalés (33),
dans lequel la région avec groupes de blocs décalés (33) est définie entre deux lignes axiales (LS) tirées en passant par les extrémités circonférentielles de chacun des groupes (22g) des blocs décalés (22).

3. Bandage pneumatique selon la revendication 1 ou 2, dans lequel les blocs de couronne (11) incluent des blocs non décalés (21), tels que le bloc non décalé (21) est doté dans sa portion centrale, dans la direction axiale du pneumatique, d'une fente (15) s'étendant dans la direction circonférentielle du pneumatique pour former deux pièces de blocs subdivisés (16), une de chaque côté de la fente (15), et les deux pièces de blocs (16) ne sont pas décalées l'une de l'autre dans la direction circonférentielle du pneumatique,
les blocs de couronne (11) sont agencés dans la région de couronne (Cr) de la bande de roulement de telle façon que l'agencement inclut une pluralité de groupes (21g) constitués chacun de deux ou plusieurs blocs non décalés (21) agencés successivement dans la direction circonférentielle du pneumatique,
les blocs médians (13) disposés dans des régions de groupes de blocs non décalés (34) sont positionnés axialement à l'extérieur des blocs médians (13) disposés à l'extérieur des régions de groupes de blocs non décalés (34), dans lesquels la région de groupes de blocs non décalés (34) est définie entre deux lignes axiales (LS) tirées en passant à travers les extrémités circonférentielles de chacun des groupes (21g) des blocs non décalés (21).

4. Bandage pneumatique selon la revendication 3, dans lequel les blocs non décalés (21) ont une largeur axiale (W) qui est la plus petite dans les blocs de couronne (11).

5. Bandage pneumatique selon l'une quelconque des revendications 1 à 4, dans lequel les blocs décalés (22) ont une largeur axiale (22) qui est la plus grande dans les blocs de couronne (11).

6. Bandage pneumatique selon l'une quelconque des revendications 1 à 5, dans lequel la portion formant bande de roulement (2) est dotée dans son fond d'un évidement (26) disposé entre chaque groupe de deux blocs de couronne circonférentiellement adjacents (11).

7. Bandage pneumatique selon la revendication 6, dans lequel les blocs médians (13) sont en chevauchement avec l'évidement (26) dans la direction circonférentielle du pneumatique.

8. Bandage pneumatique selon l'une quelconque des revendications 1 à 7, dans lequel
les blocs découpés (31) tels que les blocs médians (13) sont orientés de telle façon que la forme en U de la découpe en forme de U (28) s'ouvre vers l'extérieur en sens axial, et
les blocs découpés (31) tels que les blocs d'épaulement (12) sont orientés de telle façon que la forme en U de la découpe en forme de U (28) s'ouvre vers l'intérieur en sens axial.

9. Bandage pneumatique selon l'une quelconque des revendications 1 à 8, dans lequel
dans les blocs découpés (31) tels que les blocs médians (13), la profondeur (D3) de la découpe en forme de U (28) est supérieure à la profondeur (D2) de la fente (15), et
dans les blocs découpés (13) tels que les blocs d'épaulement (12), la profondeur (D3) de la découpe en forme de U (28) est supérieure à la profondeur (D2) de la fente (15) et inférieure à la profondeur (D2) de la découpe en forme de U (28) dans les blocs médians (13).
